# EUROPEAN PATENT APPLICATION

(11) **EP 4 539 548 A1**
(43) Date of publication of application: **16.04.2025**
(21) Application number: 23819682.8
(22) Date of filing: 26.05.2023
(51) Int. Cl.: H04W 40/22, H04W 16/26, H04W 28/18

(54) **COMMUNICATION DEVICE, CONTROL METHOD, AND PROGRAM**

(30) Priority: 07.06.2022 JP 2022092393
(71) Applicant: CANON KABUSHIKI KAISHA, Tokyo 146-8501 (JP)
(72) Inventor: KINOSHITA, Akihisa, Tokyo 146-8501 (JP)
(74) Representative: Canon Europe Limited
(86) International application number: PCT/JP2023/019665
(87) International publication number: WO 2023/238700

(57) **Abstract**

A communication apparatus that operates as an IAB node connected to one of an IAB donor and a communication path formed by the IAB donor in a relay transmission network complying with Integrated Access and Backhaul (IAB) regulations transmits a message for causing the IAB node connected to the communication path to set a network slice.

## Description

### TECHNICAL FIELD

The present invention relates to a communication control technique in a relay transmission system.

### BACKGROUND ART

The 3rd Generation Partnership Project (3GPP^{®}) defines a cellular communication standard. In the cellular communication standard (to be referred to as the "3GPP standard" hereinafter) in the 3GPP, Integrated Access and Backhaul (IAB) that integrates access lines and backhaul lines is being standardized (see PTL 1). In IAB, a radio resource used for an access line between a base station and user equipment (UE) is also used for a backhaul line. For example, a radio resource of the millimeter wave band such as the 28-GHz band can be used in IAB. By using IAB, a relay apparatus (IAB node) can relay communication between a base station apparatus (IAB donor) and an equipment apparatus by a wireless line. As compared with a case where a wired line such as an optical fiber is used, the area coverage can be widened at low cost.

In the 3GPP standard, the network slicing technique is adopted to satisfy required quality such as a bandwidth and a latency suitable for each communication service by virtually dividing a network (see PTLs 2 and 3). In the 3GPP standard, eMBB, URLLC, and MIoT are defined as Slice/Service Types (SSTs). Note that eMBB is an abbreviation for enhanced Mobile BroadBand, and indicates an enhanced Mobile Broadband service type. URLLC is an abbreviation for Ultra-Reliable and Low Latency Communications, and indicates a Ultra-Reliable and Low Latency service type. MIoT is an abbreviation for Massive Internet of Things, and indicates a service type of establishing many connections at the same time.

### CITATION LIST

### PATENT LITERATURE

PTL 1: Japanese Patent Laid-Open No. 2018-525874
PTL 2: Japanese Patent Laid-Open No. 2020-511848
PTL 3: Japanese Patent Laid-Open No. 2018-160772

### SUMMARY OF INVENTION

### TECHNICAL PROBLEM

In a case where network slices are applied to a network configuration using IAB, it is necessary to perform an operation for setting, in each of one or more IAP nodes included in a communication path up to user equipment (UE), a slice corresponding to a service requested by the UE.

### SOLUTION TO PROBLEM

The present invention provides a method of efficiently applying network slices in a network configuration using IAB.

A communication apparatus according to one aspect of the present invention is a communication apparatus that operates as an IAB node connected to one of an IAB donor and a communication path formed by the IAB donor in a relay transmission network complying with Integrated Access and Backhaul (IAB) regulations, comprising: transmission means for transmitting a message for causing the IAB node connected to the communication path to set a network slice.

### ADVANTAGEOUS EFFECTS OF INVENTION

According to the present invention, it is possible to efficiently apply network slices in a network configuration using IAB.

Other features and advantages of the present invention will be apparent from the following description taken in conjunction with the accompanying drawings. Note that the same reference numerals denote the same or like components throughout the accompanying drawings.

### BRIEF DESCRIPTION OF DRAWINGS

The accompanying drawings, which are incorporated in and constitute a part of the specification, illustrate embodiments of the invention and, together with the description, serve to explain principles of the invention.
Fig. 1 is a view showing an example of the configuration of a wireless communication system;
Fig. 2 is a block diagram showing an example of the hardware configuration of an IAB donor;
Fig. 3 is a block diagram showing an example of the functional configuration of the IAB donor;
Fig. 4 is a view showing an example of information for associating a communication path and network slices;
Fig. 5A is a view showing an example of the structure of information included in a message to be transmitted/received;
Fig. 5B is a view showing an example of the structure of information included in a message to be transmitted/received;
Fig. 6 is a flowchart illustrating an example of the procedure of processing executed by the IAB donor;
Fig. 7 is a sequence chart showing an example of the procedure of communication processing executed in the wireless communication system;
Fig. 8 is a view showing an example of the configuration of a wireless communication system;
Fig. 9 is a view showing an example of information for associating a communication path and network slices; and
Fig. 10 is a flowchart illustrating an example of the procedure of processing executed in the wireless communication system.

### DESCRIPTION OF EMBODIMENTS

Hereinafter, embodiments will be described in detail with reference to the attached drawings. Note, the following embodiments are not intended to limit the scope of the claimed invention. Multiple features are described in the embodiments, but limitation is not made to an invention that requires all such features, and multiple such features may be combined as appropriate. Furthermore, in the attached drawings, the same reference numerals are given to the same or similar configurations, and redundant description thereof is omitted.

### (First Embodiment)

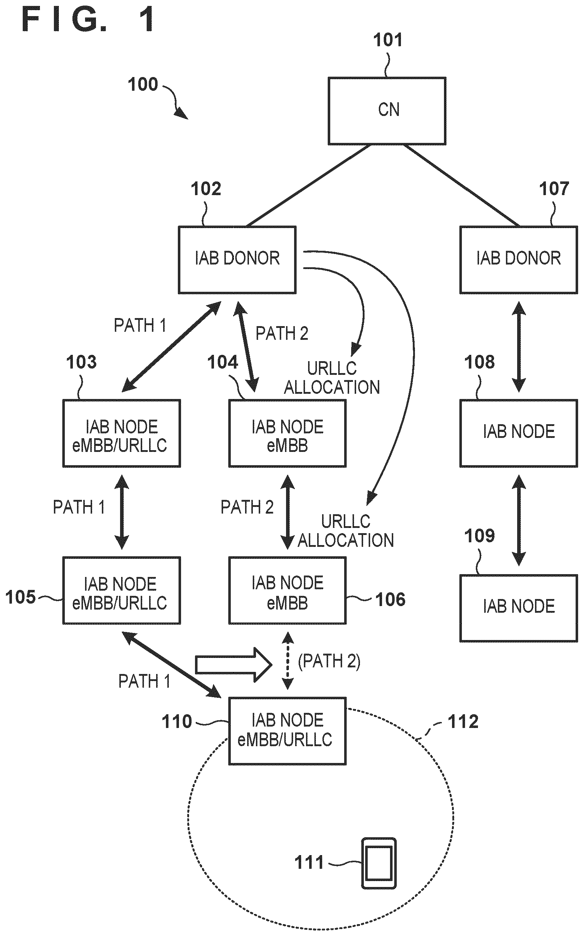

Fig. 1 shows an example of the configuration of a wireless communication system according to this embodiment. A wireless communication system 100 shown in Fig. 1 is configured to include a relay transmission network complying with the Integrated Access and Backhaul (IAB) regulations in the 3rd Generation Partnership Project (3GPP). In the IAB relay transmission network, wireless communication in which an access line and a backhaul line are integrated is performed. The IAB relay transmission network will be referred to as an IAB network hereinafter. The IAB network is configured to include IAB donors (for example, an IAB donor 102 and an IAB donor 107) and IAB nodes (for example, IAB nodes 103 to 106 and IAB nodes 108 to 110). Relay transmission via these IAB donors and IAB nodes provides a communication service to equipment (for example, equipment 111) staying in an area (for example, an area 112) provided by any node (IAB donor or IAB node). Note that the configuration shown in Fig. 1 is merely an example, and more IAB donors, more IAB nodes, and more equipment apparatuses can exist, as a matter of course.

An IAB donor handles an IAB node as equipment, establishes connection, and then performs setting based on Backhaul Adaptation Protocol (BAP). Upon completion of the setting, the IAB node functions as a relay apparatus. Note that the IAB donor can accommodate a plurality of IAB nodes. In the example of Fig. 1, the IAB donor 102 accommodates the IAB nodes 103 to 106 and the IAB node 110, and the IAB donor 107 accommodates the IAB nodes 108 and 109. Note that a plurality of IAB nodes can be connected in series so that, for example, the IAB node 109 is connected on the downstream side of the IAB node 108. A plurality of IAB nodes may be connected in parallel with a common IAB donor (or IAB node) so that the IAB node 102 and the IAB node 104 are connected on the downstream side of the IAB donor 102. An IAB donor is configured to be connectable to a core network (CN 101) using, for example, a wired line. The IAB donor and the core network can be connected by, for example, an Internet Protocol (IP) network. Note that communication from the IAB-based core network to each IAB node will sometimes be referred to as backhaul communication in distinction from communication via an access line between an IAB donor or IAB node and equipment. Among nodes (IAB donors or IAB nodes) directly connected in a communication path, a node connected to a side (upstream side) close to the core network when viewed from a given IAB node will sometimes be referred to as a "parent node" of the IAB node hereinafter. In addition, among the IAB nodes directly connected in the communication path, a node connected to a side (downstream side) far from the core network when viewed from the given IAB node will sometimes be referred to as a "child node" hereinafter.

Referring to Fig. 1, the IAB node 103 and the IAB node 104 are connected as child nodes to the IAB donor 102. The IAB node 105 is connected as a child node to the IAB node 103, and the IAB node 110 is connected as a child node to the IAB node 105. In this way, the IAB donor 102, the IAB node 103, the IAB node 105, and the IAB node 110 are connected in this order, thereby forming a communication path from the IAB donor 102 to the IAB node 110. In this example, this communication path is called a "path 1". The IAB node 106 is connected as a child node to the IAB node 104. This connects the IAB donor 102, the IAB node 104, and the IAB node 106 in this order, thereby forming a communication path from the IAB donor 102 to the IAB node 106. In this example, this communication path is called a "path 2". Furthermore, the IAB node 108 is connected to the IAB donor 107, and the IAB node 109 is connected as a child node to the IAB node 108. This connects the IAB donor 107, the IAB node 108, and the IAB node 109 in this order, thereby forming a communication path from the IAB donor 107 to the IAB node 109.

Equipment can be connected to the core network via the IAB donor and the IAB node. Referring to Fig. 1, the equipment 111 is connected to the cell 112 provided by the IAB node 110, and is connected to the CN 101 via the IAB node 110, the IAB node 105, the IAB node 103, and the IAB donor 102.

Note that this wireless communication system is configured to be applied with network slices. In this case, in accordance with a communication service to be used by an equipment apparatus connected to an IAB node, a corresponding network slice needs to be set not only in the IAB node but also in an IAB node on the upstream side of the IAB node. For example, assume that a communication service corresponding to Ultra-Reliable and Low Latency Communications (URLLC) is provided to the equipment 111 connected to the IAB node 110. In this case, a URLLC network slice needs to be set not only in the IAB node 110 but also in the IAB node 103 and the IAB node 105. For example, the same applies to a case where a communication service corresponding to enhanced Mobile BroadBand (eMBB) is provided to the equipment 111 or another equipment. That is, an eMBB network slice is set not only in the IAB node 110 but also in the IAB node 103 and the IAB node 105. As described above, it is possible to provide a suitable communication environment for each service by setting a network slice in all IAB nodes forming a communication path.

In IAB, for example, a radio resource of the millimeter wave band such as the 28-GHz band can be used but a radio wave of the millimeter wave band may attenuate strongly depending on weather conditions. In addition, when an obstacle is present on a propagation path, a radio wave of a high-frequency band like the millimeter wave band cannot propagate around the obstacle because of the straightness of the radio wave, and thus may not maintain communication. When the millimeter wave band is used in a radio link set between an IAB donor and an IAB node or between two IAB nodes, a Radio Link Failure (RLF) may occur to temporarily inhibit communication in the radio link. Note that the RLF can be called BH RLF to clarify that the RLF is an RLF in the backhaul (BH) line. When a BH RLF occurs, an IAB node on the downstream side in a section where the BH RLF occurs finds another connectable IAB node to perform connection, and establishes a new route to the IAB donor, thereby making it possible to restore the backhaul communication. Assume also that even in a case of an RLF other than a BH RLF, when communication quality with a parent node changes, the IAB node should change an already established route. Furthermore, in an IAB framework, it is possible to provide redundancy in topology, and an IAB node can set links for backhaul communication with a plurality of parent nodes. For example, the IAB node 110 can establish connection to the IAB node 106 while establishing connection to the IAB node 105. Note that the IAB node 110 is connected to the path 1 but is not connected to the path 2 unless otherwise specified.

It can be assumed that a network slice set before the connection destination of an IAB node that changes the connection destination is changed is not set in an IAB node as a connection destination candidate after the change. For example, assume that the IAB node 110 for which setting for URLLC and eMBB is performed switches the connection destination from the IAB node 105 to another IAB node. Assume also that the IAB node 110 detects the IAB node 106 as a connection destination candidate after the change existing on the periphery. In this case, since setting of the URLLC network slice is not performed in the IAB node 106, it is necessary to perform the setting. It is also necessary to perform setting of the URLLC network slice in the IAB node 104 to which the IAB node 106 is connected. To the contrary, by predicting that the IAB node 110 is to be connected, it is possible to, for example, manually, individually perform setting of the URLLC network slice in the IAB node 106 and the IAB node 104 in advance. However, when performing such setting, it is necessary to individually perform setting for an enormous number of IAB nodes, which is cumbersome. Furthermore, for example, when the IAB node 110 is connected to the IAB node 106, it is possible to perform setting of the URLLC network slice in the IAB node 106 by issuing a predetermined request to the IAB node 106. However, since setting of the URLLC network slice is not performed in the IAB node 104, the IAB node 106 transmits a network slice setting request to the IAB node 104. As described above, it is assumed that when setting is sequentially performed in respective IAB nodes forming a path by tracing the path, much time is required to complete the setting and the efficiency is not good.

In this embodiment, in consideration of the above problem, an IAB donor manages a network slice whose setting is complete in each path, and setting of a network slice in the path after changing the connection destination of an IAB node under the IAB donor is collectively executed in accordance with the change of the connection destination. Note that "under the IAB donor" indicates a communication path managed by the IAB donor and IAB nodes forming the communication path. In the example shown in Fig. 1, the IAB nodes under the IAB donor 102 are the IAB nodes 103 to 106 and the IAB node 110, and the IAB nodes under the IAB donor 107 are the IAB nodes 107 to 109. The IAB donor 102 holds, for example, information of a network slice whose setting is complete in each of the paths 1 and 2. Then, when the IAB node 110 changes the connection destination to the IAB node 106, the IAB donor 102 sets, in the path from the IAB node 106 to the IAB donor 102, the network slice set in the IAB node 110. In the example shown in Fig. 1, the IAB donor 102 instructs to set the URLLC network slice not only in the IAB node 106 but also in the IAB node 104. This can collectively set the network slice for the respective IAB nodes on the path, and it is possible to quickly execute communication by the appropriate network slice after the IAB node 110 switches the communication path.

An example of the configuration of an IAB donor that executes the control processing and an example of the procedure of the processing will be described below. Note that the functions of the IAB donor to be described below may be held by some of the IAB nodes. For example, when a plurality of paths via a plurality of child nodes, connected in parallel, of an IAB node are formed, the IAB node may manage information concerning the plurality of paths and set a network slice.

### (Apparatus Configuration)

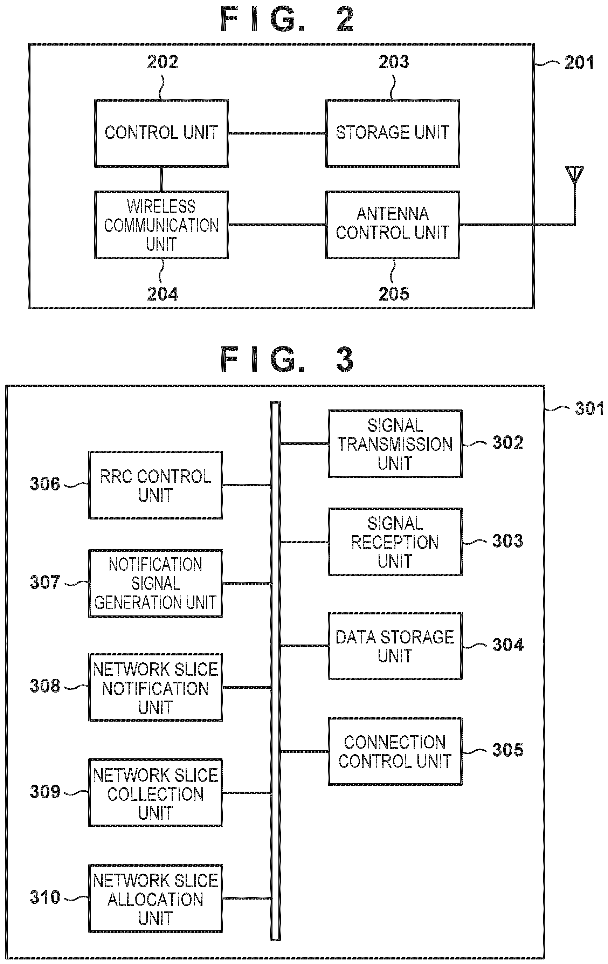

Fig. 2 shows an example of the hardware configuration of a communication apparatus 201 functioning as an IAB donor according to this embodiment. Note that a case where the communication apparatus 201 has the functions of an IAB donor will be described but a communication apparatus functioning as an IAB node may have the same configuration. Note that some of IAB nodes may have the configuration to be described below. That is, the remaining IAB nodes may have a different configuration. The configuration shown in Fig. 2 is merely an example, and the communication apparatus 201 may be implemented by a hardware configuration different from that shown in Fig. 2. For example, the communication apparatus 201 need not include some of hardware components shown in Fig. 2, and may include an additional component.

For example, the communication apparatus 201 includes, as the hardware configuration, a control unit 202, a storage unit 203, a wireless communication unit 204, and an antenna control unit 205. The control unit 202 is configured to include one or more processors such as a CPU and an MPU, and controls the overall apparatus by executing a control program stored in the storage unit 203. Note that CPU is an abbreviation for Central Processing Unit, and MPU is an abbreviation for Micro Processing Unit. The control unit 202 may be configured to include, for example, one or more of a Field Programmable Gate Array (FPGA), a Digital Signal Processor (DSP), and an Application Specific Integrated Circuit (ASIC), each of which is configured to execute predetermined processing. The storage unit 203 is configured to include one or more memories such as a Read Only Memory (ROM) and a Random Access Memory (RAM), and one or more storage devices such as a Hard Disk Drive (HDD) and a Solid State Drive (SSD). The storage unit 203 stores, for example, control programs to be executed by the control unit 202, and various kinds of information such as communication-associated information including cell information, connected equipment information, and IAB routing information. Various operations to be described later are implemented when, for example, the control unit 202 executes a control program stored in the storage unit 203. The wireless communication unit 204 is configured to include a radio frequency (RF) chip or a baseband (BB) chip for performing wireless communication complying with the 3GPP^{®} Long Term Evolution (LTE) standard or the 5th Generation (5G) cellular communication standard. The antenna control unit 205 controls an antenna for wireless communication performed by the wireless communication unit 204. Note that for example, hardware for performing only control of the antenna may be separately prepared as the antenna control unit 205, or the antenna control unit 205 may be formed as part of the BB chip or RF chip.

Fig. 3 shows an example of a functional configuration 301 of the communication apparatus 201. Note that a case where the communication apparatus 201 has the functions of an IAB donor will be described but a communication apparatus functioning as an IAB node may have the same configuration. Note that some of IAB nodes may have the configuration to be described below. That is, the remaining IAB nodes may have a different configuration. The configuration shown in Fig. 3 is merely an example, and the communication apparatus 201 may be implemented by a functional configuration different from the functional configuration 301 shown in Fig. 3. For example, the communication apparatus 201 need not have some of functions shown in Fig. 3, and may include an additional component.

The communication apparatus 201 includes, as the functional configuration 301, for example, the functions of a general base station apparatus in the cellular communication system. The functional configuration 301 includes, as the functions of the general base station apparatus, for example, a signal transmission unit 302, a signal reception unit 303, a data storage unit 304, a connection control unit 305, an RRC control unit 306, and a notification signal generation unit 307. In addition, the functional configuration 301 of the communication apparatus 201 includes functions associated with a network slice. The functions associated with a network slice include, for example, a network slice notification unit 308, a network slice collection unit 309, and a network slice allocation unit 310.

The signal reception unit 302 and the signal transmission unit 303 perform wireless communication complying with the LTE or 5G cellular communication standard with the equipment apparatus. The data storage unit 304 stores software itself, IAB routing information, information concerning connected equipment, and the like. The data storage unit 304 can store, for example, a Public Land Mobile Network Identity (PLMN ID). The PLMN ID is an ID for identifying a communication carrier, and is set in the communication apparatus 201 by the communication carrier and stored in the data storage unit 304.

The connection control unit 305 executes connection control with the equipment or the core network function. For example, the connection control unit 305 executes processing associated with connection or disconnection of the equipment to or from the cellular network. As an example, the connection control unit 305 executes processing such as synchronization establishment processing with each equipment apparatus. The RRC control unit 306 executes connection control in the RRC layer, including transmission/reception of a radio resource control (RRC) message to/from the equipment or core network function. For example, for an IAB node that is newly connected or an IAB node whose connection has been switched from an IAB node under another IAB donor to an IAB node under the self-apparatus, the RRC control unit 306 establishes RRC connection by handling the IAB node as equipment. Furthermore, when an IAB node changes an IAB donor as a relay source of backhaul communication or changes a connection destination IAB node, the RRC control unit 306 can transmit a message for requesting equipment currently connected to the IAB node to release the RRC connection. For each cell provided by the communication apparatus 201, the notification information generation unit 307 periodically transmits, to the surroundings, notification information including system information and information for decoding the system information. By receiving the notification information, another base station apparatus or equipment can recognize the presence of the base station apparatus existing near the self-apparatus and perform connection processing to the base station apparatus.

The network slice notification unit 308 and the network slice collection unit 309 execute processing for the IAB donor to share network slice information with the connection source under the IAB donor. For example, the network slice notification unit 308 notifies another IAB node or equipment directly connected or connected to an IAB node under the IAB donor of network slice information supported by the IAB donor. The network slice collection unit 309 collects the network slice information supported or requested by the other IAB node or equipment from the other IAB node or equipment directly connected or connected to the IAB node under the IAB donor. The network slice allocation unit 310 causes the IAB donor to allocate the network slice to the other IAB node. Note that the IAB node may notify another IAB node or equipment under the IAB node of network slice information supported by the self-apparatus, and collect network slice information requested by the other IAB node or equipment.

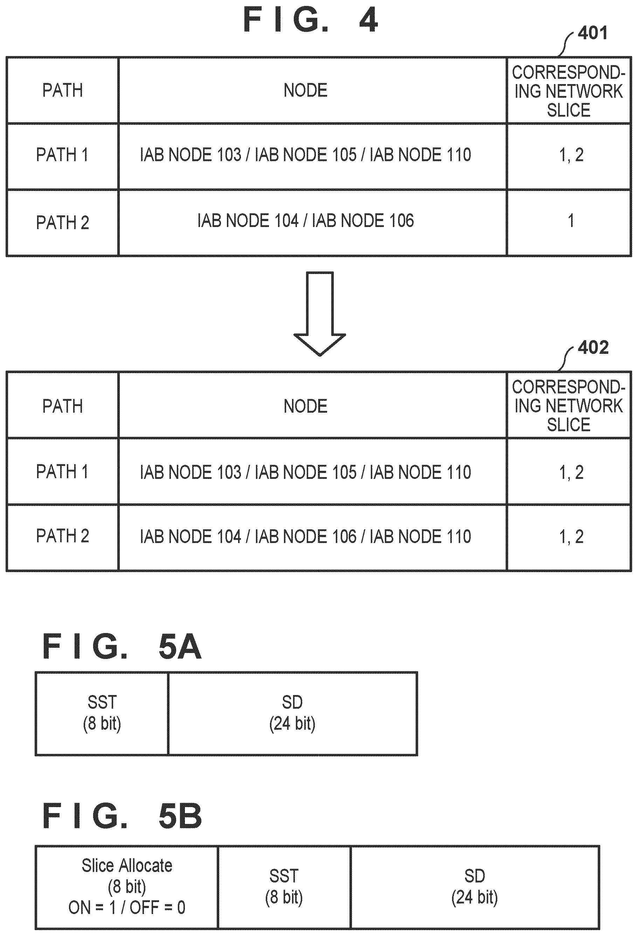

The IAB donor (in some cases, the IAB node) stores a communication path managed by the self-apparatus and a network slice set in the communication path in association with each other. For example, the IAB donor 102 can hold, as information concerning the path 1, information indicating that the eMBB and URLLC network slices are set. Fig. 4 shows an example of information of a network slice set for each path based on a request from an IAB node that is under an IAB donor (in some cases, an IAB node) and managed by the IAB donor. The IAB donor 102 stores, for example, information indicating that the eMBB and URLLC network slices are set in the IAB node 103, the IAB node 105, and the IAB node 110 included in the path 1, as indicated by information 401. In addition, the IAB donor 102 stores information indicating that the eMBB network slice is set in the IAB node 104 and the IAB node 106 included in the path 2.

Assume here that the IAB node 110 for which the eMBB and URLLC network slices have been set requests the IAB node 106 to perform new connection. In this case, the IAB donor 102 specifies, based on the information 401, that the eMBB network slice has been set and the URLLC network slice has not been set in the IAB node 104 and the IAB node 106 of the path 2. The IAB donor 102 allocates the URLLC network slice to the IAB node 104 and the IAB node 106 so that the IAB node 110 can continue communication based on the eMBB and URLLC network slices. Then, after the URLLC network slice is allocated to the IAB node 104 and the IAB node 106, the IAB node 110 establishes connection to the IAB node 106. After executing this procedure, the IAB donor 102 stores information indicating that setting of the eMBB and URLLC network slices is performed in the path 2 to which the IAB node 110 is newly connected, as indicated by information 402. Note that the IAB donor 102 may, for example, disconnect the IAB node 110 from the path 1. In this case, the allocation of the network slices to the IAB node 103 and the IAB node 105 remaining in the path 1 may be updated. If, for example, only eMBB is requested in the IAB node 103 and the IAB node 105, and URLLC is unnecessary, the IAB donor 102 may cancel the allocation of the setting of the URLLC network slice.

Fig. 5A shows the format of Single-Network Slice Selection Assistance Information (S-NSSAI) to be used to make a notification of the network slice information. The format shown in Fig. 5A is used when, for example, an IAB donor or IAB node makes a notification of network slice information supported by itself or makes a notification of network slice information requested by an IAB node or equipment connected to the IAB node. The format shown in Fig. 5A includes a Slice Service Type (SST) field and a Slice Differentiator (SD) field. Information of eMBB, URLLC, or mMTL is set as a classification of a network slice in the SST field, and optional information for further subdividing the network slice indicated by the SST field is set in the SD field. Note that if a further classification of a network slice is defined in addition to eMBB, URLLC, and mMTC, information indicating the further classification may be set in the SST field. For example, an IAB node transmits, to an IAB donor, a message obtained by setting, in the SSD and SD fields, values indicating a network slice which the IAB node requests to use or a network slice supported by the IAB node. For example, an IAB donor transmits, to an IAB donor under the IAB donor, a message obtained by setting, in the SSD and SD fields, values indicating a network slice supported by the self-apparatus. Note that NSSAI including a plurality of pieces of S-NSSAI can be transmitted/received between an IAB donor and an IAB node.

Fig. 5B shows the format of S-NSSAI to be used by an IAB donor (or IAB node) to allocate a network slice to an IAB node under the IAB donor or to cancel the allocation. The format shown in Fig. 5B includes a Slice Allocate field indicating a setting value "ON" when allocating a network slice and a setting value "OFF" when cancelling the allocation of the network slice, in addition to the SST and SD fields. Note that in an example, "ON" can be indicated when the value of the Slice Allocate field is 1 and "OFF" can be indicated when the value of the Slice Allocate field is 0. The IAB donor (or IAB node) transmits, to an IAB node under the IAB donor, a message obtained by setting, in the SST and SD fields, values indicating a network slice requested by the IAB node or currently connected equipment and setting the Slice Allocate field to "1". Furthermore, the IAB donor (or IAB node) can transmit a message obtained by setting the Slice Allocate field to "0" based on the fact that the currently connected equipment is disconnected, the fact that the IAB node under the IAB donor is moved to be under another IAB donor, or the like. Note that in this case, values indicating the network slice set in response to a request from the IAB node or equipment can be set in the SST and SD fields. This message can be transmitted to each IAB node forming a path including the IAB node to which the disconnected equipment was connected or the IAB node moved to be under the other IAB donor.

### (Procedure of Processing)

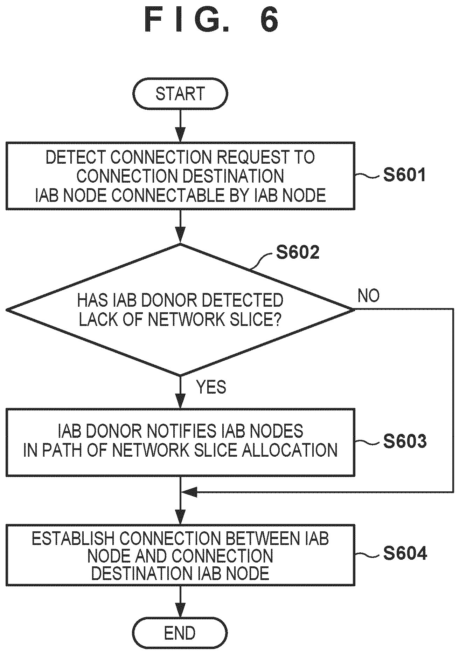

Subsequently, an example of the procedure of processing executed by an IAB donor (or IAB node) will be described with reference to Fig. 6. This processing is executed when another IAB node is connected to any IAB node forming a communication path under the IAB donor (or IAB node). Note that this processing can be implemented when, for example, the control unit 202 executes a program stored in the storage unit 203. The following description focuses on the IAB donor 102.

First, the IAB donor 102 detects a connection request to another connectable IAB node 106 by the IAB node 110 (step S601). For example, when the IAB node 110 measures a peripheral wireless environment, and specifies the connectable IAB node 106, it transmits a connection request to the IAB node 106. At this time, the connection request includes the S-NSSAI shown in Fig. 5A. Note that the connection request includes the S-NSSAI including the SST field set with URLLC and the S-NSSAI including the SST field set with eMMB. This allows the IAB donor 102 to specify network slices requested by the IAB node 110. The IAB donor 102 determines, based on the information 401, whether all the network slices requested by the IAB node 110 specified in step S601 have been set in the path 2 including the IAB node 106 as the connection request destination of the IAB node 110 (step S602). For example, with reference to the information 401, the IAB donor 102 specifies that the eMMB network slice has been set in the path 2 including the IAB node 106. Then, the IAB donor 102 can specify that the URLLC network slice requested by the IAB node 110 has not been set (YES in step S602). In this case, the IAB donor 102 notifies the IAB node 104 and the IAB node 106 included in the path 2 of allocation of the URLLC network slice (step S603). For example, the IAB donor 102 transmits, to the IAB node 104 and the IAB node 106, a message having the format shown in Fig. 5B and obtained by setting URLLC in the SST field while setting ON in the Slice Allocate field. The IAB node 104 and the IAB node 106 set the URLLC network slice by receiving this message. Then, after completion of the setting of the network slice in the IAB node 104 and the IAB node 106, the IAB donor 102 completes connection between the IAB node 110 and the IAB node 106 (step S604). Note that this is merely an example, and the IAB donor 102 may set the network slice simultaneously with establishment of connection to the IAB node 110, or may set the network slice after establishing connection to the IAB node 110. Note that if the IAB donor 102 specifies that all the network slices requested by the IAB node 110 have been set (NO in step S602), the IAB donor 102 can establish connection to the IAB node 110 without newly setting any network slice (step S604).

As described above, based on the network slice requested by the IAB node connected under the IAB donor 102, the IAB donor 102 can efficiently set the network slice in another IAB node on the communication path to which the IAB node is connected. For example, if, on the periphery of a connection target IAB node, there exists only another IAB node for which the network slice requested by the IAB node has not been set, the network slice is set in a communication path including the other IAB node. Especially, for respective IAB nodes included in the communication path, the network slice can collectively be set under the control of the IAB donor. Thus, it is possible to quickly execute communication suitable for the network slice requested by the connection target IAB node after establishing connection in the IAB node.

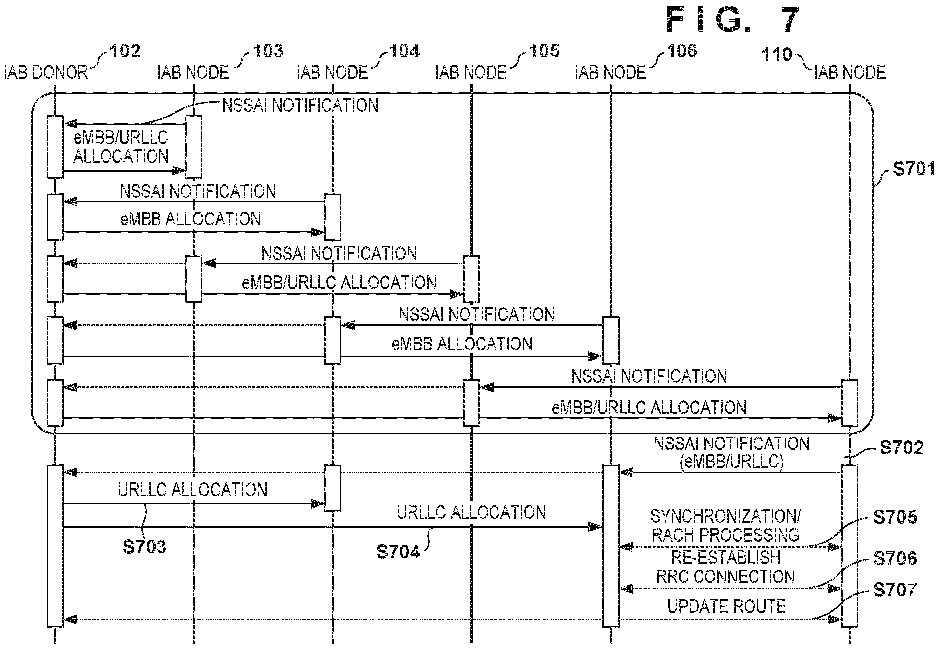

Fig. 7 shows an example of the procedure of the processing executed in the wireless communication system. Note that the following description focuses on the IAB donor 102 and the IAB nodes 103 to 106 and 110 under the IAB donor 102, and the IAB donor 107 and the IAB nodes under the IAB donor 107 will not be described. An operation for the IAB donor 102 to allocate a network slice to the IAB node 104 and the IAB 106 when the IAB node 110 connected to the IAB node 105 switches the connection destination to the IAB 106 will now be described.

First, setting concerning each of the path 1 including the IAB node 103, the IAB node 105, and the IAB node 110 and the path 2 including the IAB node 104 and the IAB node 106 is executed under the control of the IAB donor 102 (S701). For example, the IAB donor 102 receives NSSAI including S-NSSAI indicating eMBB and S-NSSAI indicating URLLC, and sets the eMBB and URLLC network slices in the IAB node 103. Similarly, the IAB donor 102 sets the eMBB and URLLC network slices in the IAB node 105 connected to the IAB node 103 and the IAB node 110 connected to the IAB node 105. Note that Fig. 7 shows an example in a case where the eMBB and URLLC network slices are set in each of the IAB node 103 and the IAB node 105 at the time of connection but the present invention is not limited to this. For example, only one of the eMBB and URLLC network slices may be set in the IAB node 103 and the IAB node 105 based on a service requested by equipment connected to the self-apparatus. After that, in response to a request, by the IAB node 110, to perform connection to the IAB node 105, an unset network slice out of the eMBB and URLLC network slices may be set in the IAB node 103 and the IAB node 105. With the above operation, both the eMBB and URLLC network slices are set in each IAB node of the path 1. On the other hand, only the eMBB network slice can be set in the IAB node 104 and the IAB node 106 forming the path 2, similar to the above-described processing.

After that, the IAB node 110 is assumed to change the connection destination to the IAB node 106 along with a change in a wireless environment or movement of the self-apparatus. At this time, the IAB node 110 transmits, to the IAB node 106, NSSAI including S-NSSAI corresponding to eMBB and S-NSSAI corresponding to URLLC (S702). The IAB node 106 transfers the NSSAI to the IAB donor 102 via the IAB node 104. Note that this is merely an example, and the IAB node 110 may, for example, include the NSSAI in information indicating that the IAB node 106 is set as a connection switching destination, and transmit the message via the path 1 to which connection is established at this time. Furthermore, the IAB donor 102 already knows, in S701, the network slices requested by the IAB node 110. Therefore, the IAB node 110 may notify the IAB donor 102 of only a connection request in which the IAB node 106 is set as a connection switching destination.

Based on the connection request, the IAB donor 102 detects that the URLLC network slice has not been set in the IAB node 104 and the IAB node 106. Then, the IAB donor 102 transmits, to each of the IAB node 104 and the IAB node 106, the message shown in Fig. 5B in which ON is set in the Slice Allocate field and URLLC is set in the SST field (S703 and S704). This collectively allocates the URLLC network slice to the IAB node 104 and the IAB node 106. After that, the IAB node 110 establishes synchronization of a downlink based on a synchronization signal from the IAB node 106, and establishes synchronization of an uplink by Random Access Channel (RACH) processing (S705). Then, the IAB node 110 establishes RRC connection to the IAB node 106 (to the IAB donor 102 via the IAB node 106) (S706). After that, the IAB donor 102 updates connection information including route information with the IAB nodes connected under the IAB donor 102, and establishes a route between the IAB donor 102 and the IAB node 110. This can provide a communication environment suitable for a service to equipment using the necessary network slice settings immediately after connection of the IAB node 110 in the path from the IAB donor 102 to the IAB node 110.

### (Second Embodiment)

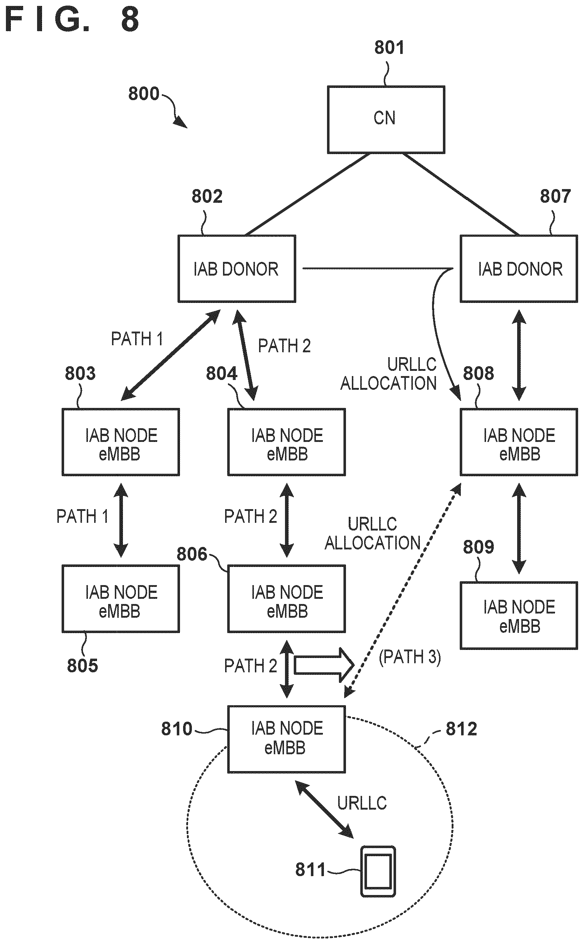

Fig. 8 shows an overview of an operation in a wireless communication system 800 according to this embodiment. In the wireless communication system 800, a path 1 including an IAB node 803 and an IAB node 805 and a path 2 including an IAB node 804, an IAB node 806, and an IAB node 810 are formed under an IAB donor 802. In the paths 1 and 2, an eMBB network slice is set.

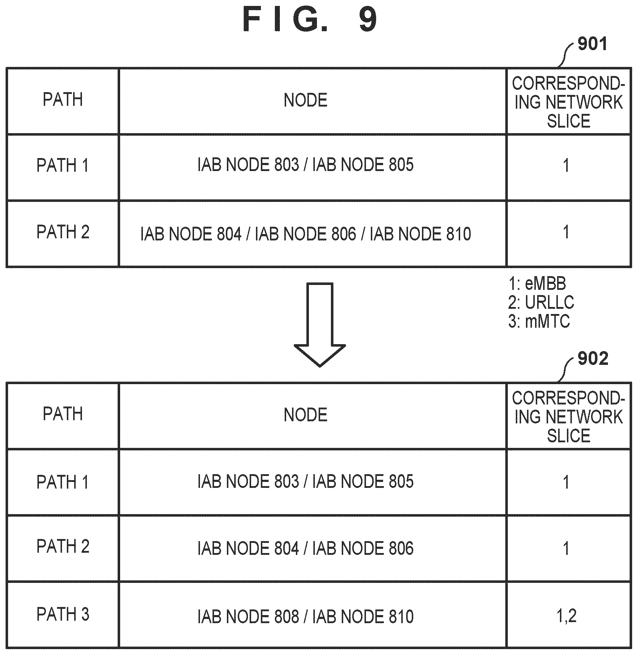

In this case, with respect to the paths 1 and 2, the IAB donor 802 holds information indicating the IAB nodes included in each path, and information indicating the set (corresponding) network slice in each path, as indicated by information 901 shown in Fig. 9. Furthermore, a path including an IAB node 808 and an IAB node 809 is formed under an IAB donor 807, and the eMBB network slice is set. Note that the IAB donor 807 also holds the same information (not shown) as the information 901.

In this state, assume that equipment 811 located in a cell 812 provided by the IAB node 810 and currently connected to the IAB node 810 requests the IAB node 810 to perform URLLC communication. For example, the equipment 811 in an unconnected state transmits, to the IAB node 810, a connection request for URLLC communication. The equipment 811 currently connected to the IAB node 810 may transmit, to the IAB node 810, a message for requesting URLLC communication in response to activation of a new application or the like. At this time, the IAB node 810 requests the IAB donor 802 to set a URLLC network slice. The IAB donor 802 determines whether it is possible to set the URLLC network slice in the communication path under the IAB donor 802. If it is possible to set the URLLC network slice, the network slice is set, as in the first embodiment.

On the other hand, if it is determined that it is impossible to set the URLLC network slice in any communication path under the IAB donor 802, the IAB donor 802 determines whether it is possible to perform connection via another IAB donor under which an IAB node connectable to the IAB node 810 exists. For example, the IAB donor 802 obtains the measurement result of a notification signal or a reference signal from another peripheral IAB node in the IAB node 810, and specifies, as an IAB node of a connection switching destination candidate, another IAB node under an IAB donor other than the self-apparatus. Then, the IAB donor 802 determines whether the IAB node of the connection switching destination candidate can set the URLLC network slice. For example, the IAB node 810 can refer to a notification signal or the like from another peripheral IAB node to specify a network slice which the other IAB node can support, and notify the IAB donor 802 of the specified result. In an example, the IAB donor 802 can extract the IAB node that can support the URLLC network slice, and specify the IAB node as a connection switching destination candidate of the IAB node 810. Furthermore, the IAB node 810 may transmit, to the IAB donor 802, a report of the measurement result and the like with respect to only another IAB node that can support the network slice requested by the self-apparatus. Furthermore, when obtaining information of the IAB node of the connection switching destination candidate from the IAB node 810, the IAB donor 802 may inquire of the IAB donor, under which the IAB node exists, about whether it is possible to support the URLLC network slice.

Assume here that the IAB donor 807 can support the URLLC network slice, and the IAB node 808 is specified as the connection switching destination candidate of the IAB node 810. In this case, the IAB donor 802 decides to switch (hand over) the connection destination of the IAB node 810 from the IAB node 806 to the IAB node 808. At this time, the IAB donor 802 notifies the IAB donor 807 of information of the IAB node 810, the fact that the URLLC network slice is requested, information indicating the IAB node 808 of the connection switching destination candidate, and the like. Based on the this notification, the IAB donor 807 notifies the IAB node 808 of allocation of the URLLC network slice. This sets the URLLC network slice in the communication path from the IAB donor 807 to the IAB node 808. After that, the IAB node 110 establishes connection to the IAB node 808.

After the connection switching processing, for example, the IAB donor 802 holds information obtained by excluding the IAB node 810 from the path 2, as indicated by pieces of information of the paths 1 and 2 of information 902 shown in Fig. 9. At this time, in the paths 1 and 2, the URLLC network slice is not set, and thus the corresponding network slice information remains unchanged. On the other hand, the IAB donor 807 newly holds information of a path obtained when the IAB node 810 is connected to the IAB node 808, as indicated by information of a path 3 of the information 902. Note that the URLLC network slice is set in the path 3, and thus the URLLC network slice is included as the corresponding network slice. Note that with respect to the information 902 shown in Fig. 9, each of the IAB donor 802 and the IAB donor 807 can hold part of the information concerning the communication path under the IAB donor, as described above. In an example, each of the IAB donor 802 and the IAB donor 807 may hold all of the information 902. That is, the IAB donor 802 may hold not only the information concerning the communication path managed by the self-apparatus but also information concerning the communication path managed by another peripheral IAB donor.

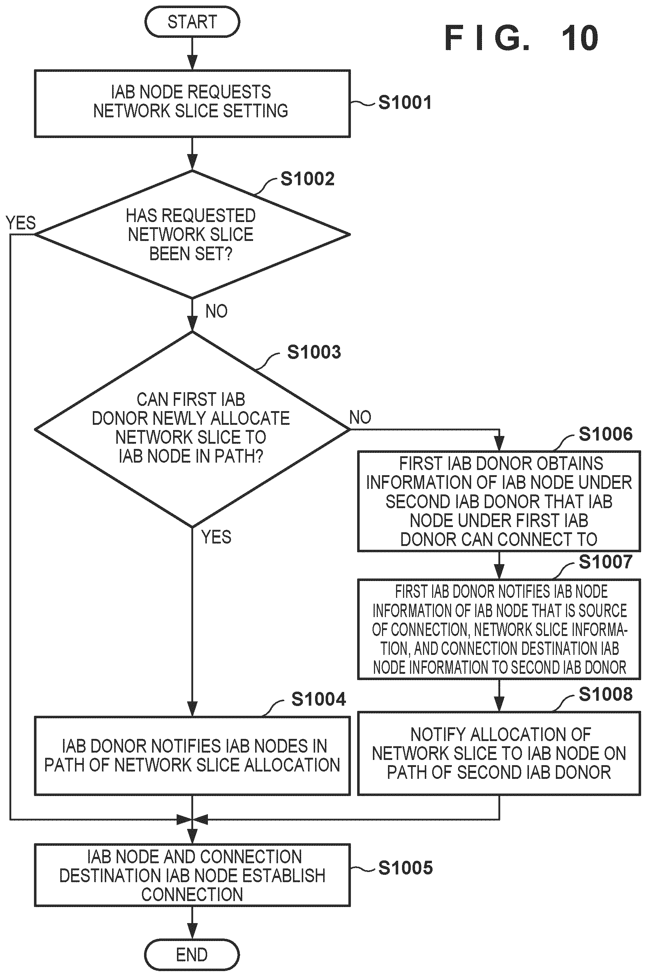

Subsequently, an example of the procedure of processing executed in the wireless communication system will be described with reference to Fig. 10. Note that the IAB node 810 is connected to the IAB node 806 under the IAB node 802 and the URLLC network slice cannot be set in this state, as described above. The following processing is implemented when the control unit 202 of the IAB donor or IAB node as the operation entity of each process executes a program stored in the storage unit 203.

In this processing, first, the IAB node 810 requests the currently connected IAB donor 802 to set the URLLC network slice (step S1001). For example, the IAB node 810 can transmit, to the IAB donor 802 via the currently connected IAB node 806, a message including S-NSSAI in which URLLC is set in the SST field of the format shown in Fig. 5A. The setting request of the URLLC network slice may be sent by, for example, transferring, to the IAB donor 802, a message for requesting the URLLC network slice transmitted from the equipment 812 to the IAB node 810. That is, the IAB donor 802 may be notified that the URLLC network slice should be set in the IAB node 810 without performing particular determination processing and the like in the IAB node 810. Note that when the IAB node 810 requests initial connection to the IAB donor 802, the URLLC network slice may be requested. In this case, the IAB node 810 can transmit a connection request including a request of the URLLC network slice to the IAB node 805 or the IAB node 806 existing on the periphery. In this case, upon receiving the connection request, the IAB node 805 or the IAB node 806 transfers the connection request to the IAB donor 802.

The IAB donor 802 determines whether the network slice requested from the IAB node 810 has been set in the communication path including the IAB node as the connection destination of the IAB node 810 (step S1002). If the network slice has already been set (YES in step S1002) and if connection between the IAB node 806 and the IAB node 810 is not established, the IAB donor 802 establishes the connection (step S1005). The IAB donor 802 sets the network slice with respect to the IAB node 810, thereby completing the processing. On the other hand, if the network slice has not been set (NO in step S1002), the IAB donor 802 determines whether it is possible to set the requested network slice in the communication path under the self-apparatus (step S1003). That is, if, for example, a request from the IAB node 810 connected to the IAB node 806 is received, the IAB donor 802 determines whether it is possible to allocate the URLLC network slice in the path 2 including the IAB node 806. Furthermore, if the IAB donor 802 determines that it is impossible to allocate the URLLC network slice in the path 2, it can determine whether it is possible to allocate the network slice in another path, under the self-apparatus, to which the IAB node 810 is connectable. If it is determined that it is possible to allocate the requested network slice in the path, under the self-apparatus, to which the IAB node 810 is connectable (YES in step S1003), the IAB donor 802 executes allocation of the network slice (step S1004). Then, the IAB node 810 is connected to the IAB node on the path to which the network slice has been allocated (step S1005). Note that if it is possible to set the network slice without changing the connection destination by the IAB node 810, the processing of step S1005 can be omitted.

If it is determined that it is impossible to allocate the requested network slice in the path, under the self-apparatus, to which the IAB node 810 is connectable (NO in step S1003), the IAB donor 802 advances the process to step S1006. In step S1006, the IAB donor 802 obtains information concerning an IAB node under another IAB donor (for example, the IAB donor 807) to which the IAB node 810 is connectable. Note that the IAB node to which the IAB node 810 is connectable is, for example, an IAB node that sends a notification signal at such power level that the IAB node 810 can receive the signal. For example, the IAB donor 802 can obtain, from the IAB node 810, this information by a notification of the measurement result of the notification signal by the IAB node 810 or the like. Note that the IAB donor 802 can hold, in advance, from another IAB donor under which an IAB node that forms a cell adjacent to a cell provided by an IAB node under the self-apparatus exists, information of the node that provides the adjacent cell. Then, the IAB donor 802 can designate, to the IAB node 810, the IAB nodes under the other IAB donor as cells to be measured. In this case, with respect to at least some of the designated IAB nodes, the IAB node 810 can notify the IAB donor 802 of identification information of each IAB node and the measurement result of radio quality in association with each other. For example, the IAB donor 802 can obtain in advance, from another IAB donor to which the URLLC network slice can be allocated, information of the IAB nodes under the other IAB donor. This allows the IAB donor 802 to specify whether an IAB node that can support the URLLC network slice exists on the periphery of the IAB node 810. Assume here that the IAB donor 802 specifies that the IAB node 808 under the IAB donor 807 is an IAB node that can support the URLLC network slice and is connectable to the IAB node 810.

The IAB donor 802 transmits, to the IAB donor 807 that manages the IAB node 808, information of the IAB node 810, the network slice information requested by the IAB node 810, and information of the IAB node 808 (step S1007). That is, the IAB donor notifies another IAB donor, that manages another IAB node as a connection destination, of information for specifying an IAB node under the self-apparatus, information of another IAB node that should be a connection destination of the IAB node, and the requested network slice information. Then, the IAB donor 807 notifies the IAB node 808 as the connection destination of the IAB node 810 of allocation of the requested network slice (step S1008), and the network slice is set in the IAB node 808. The IAB node 810 is connected to an IAB node on a path to which the network slice is allocated (step S1005).

Note that in this embodiment, the network slice information requested by the IAB node 810 can be information indicating URLLC and eMMB but may be information indicating only URLLC. That is, in an example, the IAB donor 802 may connect the IAB node 810 to the IAB node 808 to allocate the URLLC network slice while maintaining the path 2 supporting eMMB with the IAB node 810. Furthermore, URLLC and eMMB are indicated as the network slice information requested by the IAB node 810, and the IAB donor 807 may set both the URLLC and eMMB network slices in a path up to the IAB node 808.

Note that in the above-describe example, a case where the IAB donor 802 can or cannot set the network slice commonly in the IAB nodes under the self-apparatus has been explained, but the present invention is not limited to this. For example, in Fig. 8, URLLC cannot be set in the path 2 to which the IAB node 810 is currently connected but URLLC may be settable in the path 1. In this case, the IAB donor 802 may connect the IAB node 810 to the path 1 under the self-apparatus. That is, the IAB donor 802 need not switch the connection destination over the IAB donor. The IAB donor 802 can decide to connect the IAB node 810 to an IAB node (or path) to which the IAB node 810 is connectable and for which the requested network slice can be set. Then, if the IAB node (or path) as the connection destination is not under the self-apparatus, the IAB donor that manages the IAB node as the connection destination can be notified of information, as described above, to set the network slice. If the IAB donor 802 specifies that there is no IAB node (or path) to which the IAB node 810 is connected and for which the requested network slice can be set, the IAB donor 802 can reject the request of setting of the network slice by the IAB node 810.

Note that in each of the above-described embodiments, an example in which an IAB node establishes connection after setting a network slice. However, setting may be performed, as described above, when a network slice is not set after connection is established. At this time, if it is impossible to set a network slice in a currently connected communication path, processing of changing the connection destination may be performed, similar to the second embodiment. Furthermore, when an IAB node newly requests connection, a network slice required by the IAB node may be set in advance. That is, a network slice assumed to be set for equipment may be specified in advance, and at the time of initial connection of an IAB node that does not belong to any IAB donor, a network slice to be requested by the IAB node may be specified. At this time, for example, an individual random access procedure resource corresponding to each network slice may be prepared, and the IAB donor may specify the network slice requested by the IAB node in accordance with the resource to be used.

Each of the above-described embodiments has explained an example in which an IAB donor allocates a network slice to IAB nodes under the IAB donor but the present invention is not limited to this. For example, an IAB node (IAB node 110 or IAB node 810) that is newly connected or changes the connection destination may notify, using a message having the format shown in Fig. 5B, the IAB node as the connection destination that a network slice should be allocated. In this case, the IAB node as the connection destination sets the network slice upon receiving the message in which ON is set in the Slice Allocation field in the format shown in Fig. 5B, and further transfers the message to a parent node. Similarly, the parent node also sets the network slice. By repeating this processing, the network slice can be set in the path up to the IAB donor. That is, the IAB node (IAB node 110 or IAB node 810) that is newly connected or changes the connection destination may cause an IAB node on the path up to the IAB donor to set the network slice by transmitting the message. When the IAB node (IAB node 110 or IAB node 810) that is newly connected or changes the connection destination transmits NSSAI to the IAB donor, an IAB node on the relay path up to the IAB donor can obtain the NSSAI. Then, if the requested network slice is not set, the IAB node on the relay path up to the IAB donor may autonomously set the network slice without waiting for an instruction from the IAB donor.

Note that network slice setting according to each of the above-described embodiments may be performed only for a predetermined network slice. That is, if an IAB node requests to set a predetermined network slice at the time of new connection or change of a connection destination or based on a request by equipment, an IAB node on a path to which the IAB node is connected can be caused to set the network slice. On the other hand, if an IAB node requests to set a network slice other than the predetermined network slice, an IAB node on a path to which the IAB node is connected can be prevented from setting the network slice. In this case, if there is no path for which the network slice is set, setting of the network slice requested by the IAB node can be rejected. Conversely, if an IAB node requests to set the predetermined network slice, an IAB node on the path to which the IAB node is connected may be prevented from setting the network slice. In this case, if the IAB node requests to set a network slice other than the predetermined network slice, an IAB node on a path to which the IAB node is connected can be caused to set the network slice. In this example, the predetermined network slice is, for example, eMMB, URLLC, MIoT, or C-V2X for which a value of the SST field is currently defined. C-V2X indicates Cellular Vehicle to Everything. Note that these are merely examples, and some preset network slices can be handled as predetermined network slices. According to this example, for example, it can be configured to automatically set a high-priority network slice and to request to set the remaining network slices by a communication carrier.

With respect to each network slice set as described above, a predetermined expiration period may be set. In this case, for example, the predetermined expiration period may be stored in a message to be transmitted by including the information shown in Fig. 5B, and then each IAB node may be notified of it. This prevents the set network slices from being maintained unnecessarily, and it is possible to ensure radio resources and arithmetic resources for newly setting a network slice.

As described above, in this embodiment, an IAB donor or IAB node specifies whether a requested network slice is unset in a communication path between the IAB donor and an IAB node that newly establishes connection or changes a connection destination. If there exists an unset network slice, another IAB node on the path is caused to set the network slice. That is, a communication apparatus that operates as an IAB donor or IAB node according to this embodiment specifies lack of setting of a network slice requested by an IAB node newly connected to a communication path, and causes another IAB node on the path to automatically set the network slice. Thus, in the IAB relay transmission system, it is possible to automatically, appropriately set the requested network slice while flexibly setting/changing the communication path. Therefore, it is possible to efficiently apply the network slices in a network configuration using IAB.

The present invention can be implemented by processing of supplying a program for implementing one or more functions of the above-described embodiments to a system or apparatus via a network or storage medium, and causing one or more processors in the computer of the system or apparatus to read out and execute the program. The present invention can also be implemented by a circuit (for example, an ASIC) for implementing one or more functions.

The present invention is not limited to the above embodiments and various changes and modifications can be made within the spirit and scope of the present invention. Therefore, to apprise the public of the scope of the present invention, the following claims are made.

This application claims priority from Japanese Patent Application No. 2022-092393 filed June 7, 2022, which is hereby incorporated by reference herein.

## Claims

1. A communication apparatus that operates as an IAB node connected to one of an IAB donor and a communication path formed by the IAB donor in a relay transmission network complying with Integrated Access and Backhaul (IAB) regulations, comprising:
transmission means for transmitting a message for causing the IAB node connected to the communication path to set a network slice.

2. The communication apparatus according to claim 1, wherein the communication apparatus is the IAB donor that forms the communication path.

3. The communication apparatus according to claim 1, wherein in a case where a first IAB node is connected to the communication path and a network slice requested by the first IAB node is not set in a second IAB node included in the communication path, the transmission means transmits a message for causing the second IAB node to set the requested network slice.

4. The communication apparatus according to claim 3, further comprising:
obtaining means for obtaining, from the first IAB node, first information indicating the requested network slice;
holding means for holding second information indicating a network slice set by the second IAB node; and
determination means for determining, based on the first information and the second information, whether the requested network slice has been set in the second IAB node.

5. The communication apparatus according to claim 4, wherein the obtaining means further obtains the second information from the second IAB node.

6. The communication apparatus according to claim 4 or 5, wherein the obtaining means obtains the first information from a connection request by the first IAB node.

7. The communication apparatus according to any one of claims 4 to 6, wherein the obtaining means obtains the first information at the time of switching, by the first IAB node, a connection destination from a third IAB node belonging to another communication path formed by the IAB donor to the second IAB node belonging to the communication path.

8. The communication apparatus according to any one of claims 4 to 7, wherein in a case where equipment is connected to the first IAB node and the equipment requests communication of a network slice that is not set in the first IAB node, the obtaining means obtains the first information concerning the network slice.

9. The communication apparatus according to any one of claims 4 to 8, further comprising specifying means for specifying, as the communication path to which the first IAB node is to be connected, a path including an IAB node in which the requested network slice indicated by the first information is settable and to which the first IAB node is connectable.

10. The communication apparatus according to claim 9, further comprising means for connecting the first IAB node to the IAB node which is included in the communication path specified by the specifying means and to which the first IAB node is connectable.

11. The communication apparatus according to claim 9 or 10, further comprising notification means for notifying, in a case where the IAB node which is included in the communication path specified by the specifying means and to which the first IAB node is connectable belongs to another IAB donor different from the IAB donor, the other IAB donor of information indicating the first IAB node, information indicating the requested network slice indicated by the first information, and information indicating an IAB node to which the first IAB node is connectable.

12. The communication apparatus according to any one of claims 9 to 11, further comprising means for rejecting setting of the network slice in a case where the specifying means specifies that there is no path including the IAB node in which the requested network slice indicated by the first information is settable and to which the first IAB node is connectable.

13. The communication apparatus according to any one of claims 3 to 12, wherein in a case where, based on a fact that information indicating the first IAB node, information indicating the network slice requested by the first IAB node, and information indicating the IAB node to which the first IAB node is connectable are received from another IAB donor, the network slice requested by the first IAB node is not set in the second IAB node included in the communication path including the IAB node to which the first IAB node is connectable, the transmission means transmits a message for causing the second IAB node to set the requested network slice.

14. The communication apparatus according to any one of claims 3 to 13, wherein in a case where the requested network slice is a predetermined network slice, the transmission means does not transmit the message.

15. The communication apparatus according to any one of claims 3 to 13, wherein in a case where the requested network slice is not a predetermined network slice, the transmission means does not transmit the message.

16. The communication apparatus according to any one of claims 1 to 15, wherein the transmission means transmits the message by including, in the message, information indicating an expiration period of the network slice set by the message.

17. A control method executed by a communication apparatus that operates as an IAB node connected to one of an IAB donor and a communication path formed by the IAB donor in a relay transmission network complying with Integrated Access and Backhaul (IAB) regulations, comprising:
transmitting a message for causing the IAB node connected to the communication path to set a network slice.

18. A program for causing a computer to function as each means of a communication apparatus defined in any one of claims 1 to 16.
